# EUROPEAN PATENT APPLICATION

(11) **EP 2 072 211 A1**
(43) Date of publication of application: **24.06.2009**
(21) Application number: 08254030.3
(22) Date of filing: 17.12.2008
(51) Int. Cl.: B29C 45/00, B23K 26/10

(54) **Method for making multi-layered molded articles**

(30) Priority: 20.12.2007 CN 200710203282
(71) Applicant: FIH (Hong Kong) Limited, Hong Kong (HK)
(72) Inventor: Wu, Kun-Tsan, Shindian City Taipei Hsien Taiwan 231 (CN); Tien, Li-Wen, Shindian City Taipei Hsien Taiwan 231 (CN)
(74) Representative: Craven, Ian

(57) **Abstract**

A method of forming a multi-layered molded article (10) is described. The method includes applying a soft material to a substrate, thereby forming a substrate with a soft layer thereon. A laser machine is used to remove excess material from the semi-manufactured article to form the final multi-layered molded article.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

Many aspects of the method for making the multi-layered molded article can be better understood with reference to the following drawings. The components in the drawings are not necessarily drawn to scale, the emphasis instead being placed upon clearly illustrating the principles of the method for making the multi-layered molded article. Moreover, in the drawings like reference numerals designate corresponding parts throughout the several views.

FIG. 1 shows an exploded, schematic view of an exemplary embodiment of the present multi-layered molded article;

FIG. 2 shows a schematic view of the soft layer positioned between a female mold portion and a male mold portion;

FIG. 3 shows a schematic view when a male mold portion is matingly engaged with the female mold portion of FIG. 2;

FIG. 4 shows a schematic view of the multi-layered molded article after molten material is injected into a mold cavity; and

FIG. 5 shows a schematic view of a semi-manufactured article being cut by a layer machine.

### DETAILED DESCRIPTION OF THE EXEMPLARY EMBODIMENTS

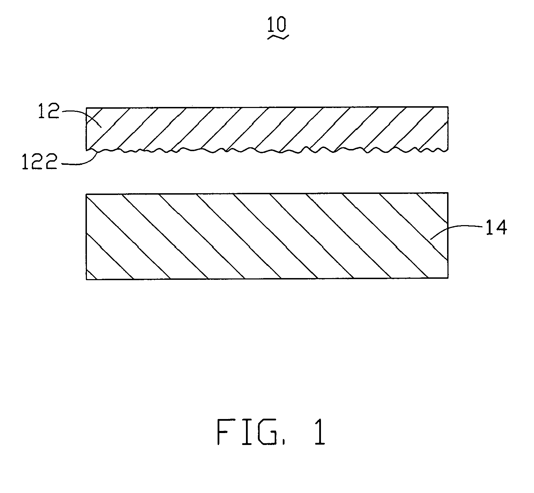

Referring to FIG. 1, in an exemplary embodiment, a multi-layered molded article 10 is shown. Article 10 includes a soft layer 12 and a substrate 14 moldingly bonded to the soft layer 12.

The soft layer 12 can be made of a material that is soft relative to the substrate 14. Exemplary soft materials include leather (natural and artificial), all types of fabrics, woven clothes, textiles, and nylon. One surface of the soft layer 12 acts as a bonding surface 122. The bonding surface 122 should have a rough or coarse surface, formed by, for example, a plurality of tiny pores or projections (schematically shown) For some soft materials, the pores and projections of the bonding surface 122 may be a natural property of the material. For other soft materials, the pores and projections may be formed by grinding or sandblasting the bonding surface 122. The tiny pores and projections of the bonding surface 122 interlock with the molten material used to make substrate 14, thereby increasing the bonding of the soft layer 12 to the substrate 10.

The substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials.

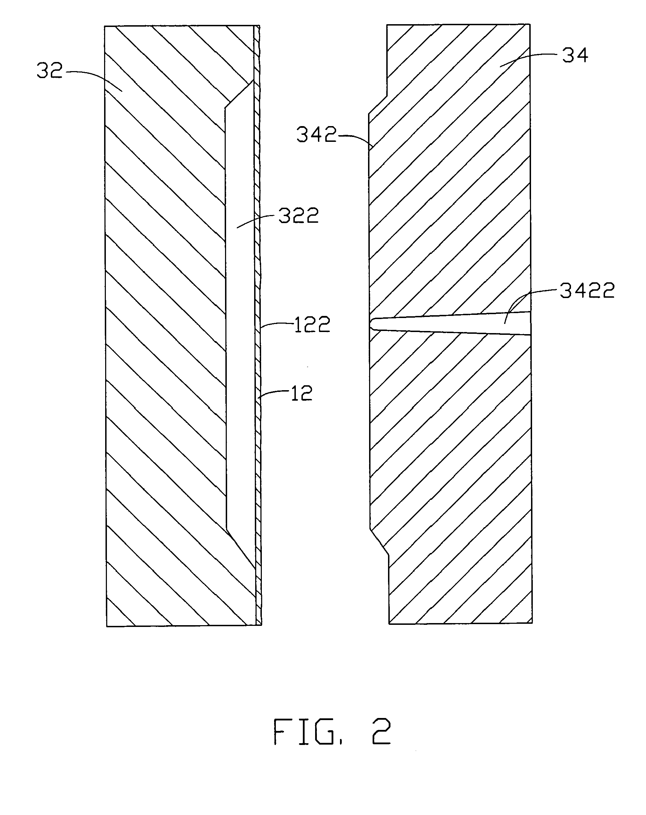

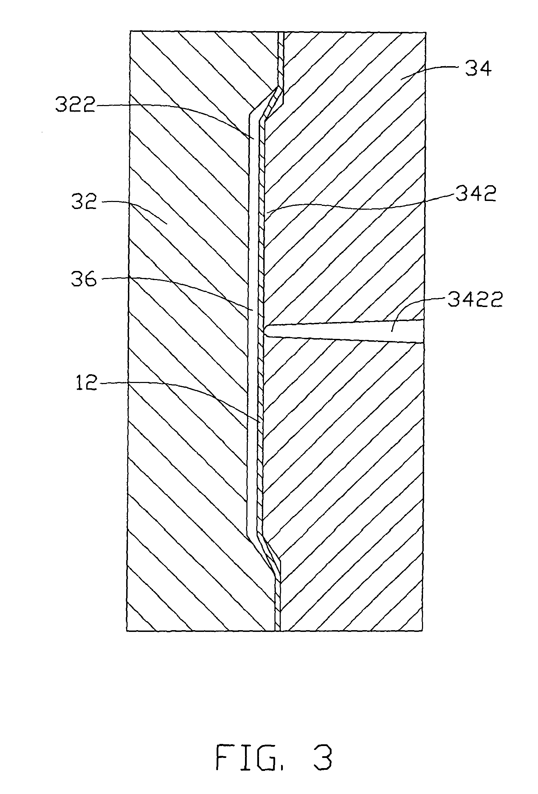

FIGS. 2-5 depict the steps of an exemplary method for preparing an exemplary multi-layered molded article 10. A soft material 12 is provided. The surface area of the soft material 12 is larger than the surface area the surface portion of the multi-layered molded article 10 to which a soft layer is applied.

Referring to FIG. 2, an injection mold is provided. The injection mold includes a female mold portion 32 and a male mold portion 34, which mates with the female mold portion 32. The female mold portion 32 defines a recess 322. A protrusion 342 extends from the male portion 34. A runner 3422 is defined in a central area of the male mold portion 34.

The soft material 12 is placed on the female mold portion 32 with the bonding surface 122 facing the male mold portion 34. When the female mold portion 32 mates with the male mold portion 34, a mold cavity 36 is defined between the female mold portion 32 and the male mold portion 34. When the female mold portion 32 and the male mold portion 34 are mated, the soft material 12 is pushed into contact with the protrusion 342 of the male mold portion 34.

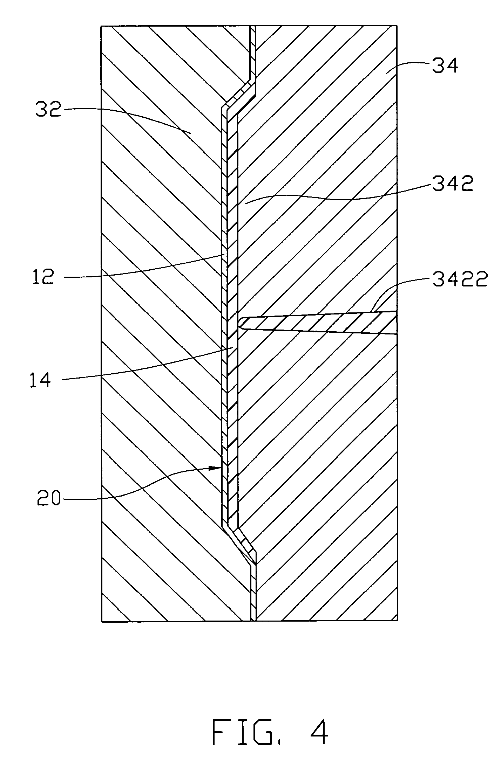

Referring to FIG. 4, the molten material is injected into the mold cavity 36 through the runner 3422. The molten material pushes the soft material 12 away from the protrusion 342 and toward the female mold portion 32. After the molded cavity 36 is filled with molten material, the substrate 14 is formed and the soft material 12 in the mold cavity 36 contacts the female mold portion 32.

The molten material is cooled and the soft material 12 integrally formed with the substrate 14 to form a semi-manufactured article 20. The male mold portion 34 is moved away from the female mold portion 32, and the semi-manufactured article 20 is taken out from the injection mold.

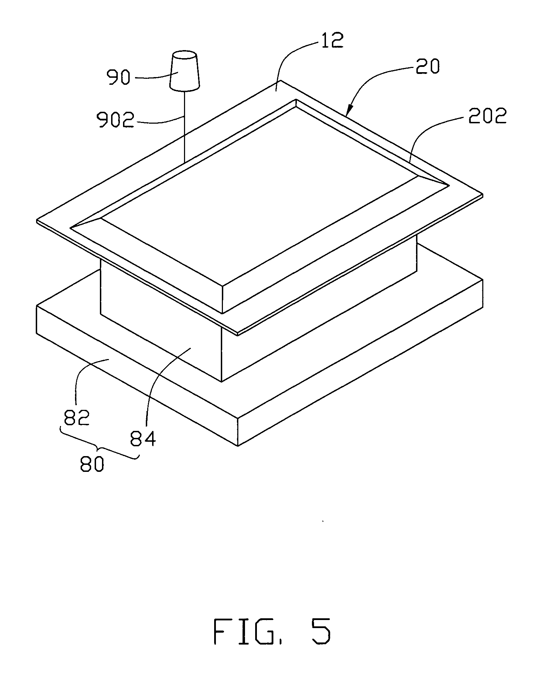

Referring to FIG. 5, the semi-manufactured article 20 has an outline 202. The portion of the semi-manufactured article 20 outside the outline 202 needs to be removed. A laser machine (only a portion of which is shown) is provided and configured for cutting the semi-manufactured article 20 to remove excess portions of the semi-manufactured article 20. The laser machine includes a laser head 90 and a positioning tool 80. The positioning tool 80 includes a base 82 and a platform 84. The platform 84 is positioned on the base 82. To perform the laser cutting process, a cutting procedure is first programmed on a computer (not shown), to precisely cut the excess soft material 12 according to the pattern of the outline 202. The semi-manufactured article 20 is then fixed on the platform 84 of the positioning tool 80 of the laser machine, and a laser beam 902 from the laser head 90 is directed at the outline 202 of the semi-manufactured article 20. The laser cutting process is controlled by the cutting procedure programmed into the computer. Finally, the semi-manufactured article 20 is cut to a predetermined size and shape, thereby forming the multi-layered molded article 10 with the soft layer 12. The multi-layered molded article 10 achieved by the laser cutting process may have a smooth brim and the soft layer 12 completely covers a surface of the substrate 14.

It should be also understood, however, that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A method of forming a multi-layered molded article, comprising:
providing a soft material;
fitting the soft material into a mold cavity of a molding apparatus;
injecting a molten material into the mold cavity to form a substrate moldingly bonded to a soft layer formed by the soft material to form a semi-manufactured article having a soft layer;
cutting the semi-manufactured article to form the multi-layered molded article.

2. The method of forming a multi-layered molded article according to claim 1, wherein the surface area of the soft material is larger than the surface area of the surface portion of the multi-layered molded article to which the soft layer is applied.

3. The method of forming a multi-layered molded article according to claim 2, wherein the soft material is chosen from the group consisting of leather, fabrics, woven clothes, textiles, and nylon.

4. The method of forming a multi-layered molded article according to claim 1, wherein the cutting step uses a laser machine.

5. The method of forming a multi-layered molded article according to claim 4, wherein the laser machine includes a laser head and a positioning tool, the positioning tool includes a base and a platform, the semi-manufactured article is fixed on the platform, and the laser head produces a laser beam that cuts the semi-manufactured article.

6. The method of forming a multi-layered molded article according to claim 1, wherein the soft material has a bonding surface having tiny pores or protrusions that interlock with the molten material.

7. A method of forming a multi-layered molded article, comprising:
providing a soft material, wherein the surface area of the soft material is larger than the surface area of the surface portion of the multi-layered molded article to which a soft layer is applied;
fitting the soft material into a mold cavity of a molding apparatus ;
injecting a molten material into the mold cavity to form a substrate, the soft material moldingly bonding to the substrate to form a semi-manufactured article having a soft layer;
cutting the semi-manufactured article with a laser machine to form the multi-layered molded article.

8. The method of forming a multi-layered molded article according to claim 7, wherein the laser machine includes a laser head and a positioning tool, the positioning tool includes a base and a platform, the semi-manufactured article is fixed on the platform, and the laser head produces a laser beam that cuts the semi-manufactured article.

9. The method of forming a multi-layered molded article according to claim 7, wherein the substrate is made of a material chosen from the group consisting of polyvinylchloride resin, polyethylene terephthalate, acrylonitrile-butadiene-styrene, polycarbonate, polyimide, liquid crystal polymer, polyetherimide, polyphenylene sulfide, polystyrene, polypropylene.
